# EUROPEAN PATENT APPLICATION

(11) **EP 4 356 758 A1**
(43) Date of publication of application: **24.04.2024**
(21) Application number: 23204336.4
(22) Date of filing: 18.10.2023
(51) Int. Cl.: A23P 20/15, A23P 20/18

(54) **METHOD FOR PRODUCING A DEEP-FRY SNACK WITH A BATTER COATING**

(30) Priority: 18.10.2022 BE 202205836
(71) Applicant: Beltaste Hamont NV, 3930 Hamont (BE)
(72) Inventor: MUYSHONDT, Leon, 3930 Hamont (BE)
(74) Representative: Brantsandpatents bv

(57) **Abstract**

The present invention concerns a method for making a deep-fried snack provided with a batter coating, comprising the steps: a) mixing batter ingredients into a homogeneous batter; b) pumping the homogeneous batter to a batter applicator by means of a pump system; c) pumping the batter from at the batter applicator to inside the batter applicator, wherein the batter applicator is set to provide a constant batter flow through a distribution mouth; and d) pumping the batter through the distribution mouth over a deep-fried snack, with the deep-fried snack being guided over a roller conveyor through the batter; wherein the homogeneous batter after mixing has a temperature between 22°C and 28°C, and a Bostwick viscosity value between 7.5 and 9.5 cm/30 s. The present invention also concerns a deep-fried snack provided with a batter coating.

## Description

### TECHNICAL FIELD

The invention relates to a method for making a deep-fried snack provided with a batter coating and to such a deep-fried snack provided with a batter coating.

### PRIOR ART

Deep-fried snacks tend to have a crispy, usually (strongly) seasoned, coating layer. When providing this coating layer, the difficulty is to completely coat the snack with a batter without losing too much batter. By adjusting the composition of the batter, the batter becomes more or less liquid, but this is often at the expense of the quality and taste of the coating.

The temperature of the batter is therefore often adjusted during coating, which, however, is at the expense of the quality and taste of the meat in the snack.

There is a clear need for an improved method in which a deep-fried snack is coated in such a layer of batter, in a cost-efficient manner that also prevents waste of the batter ingredients, but also ensures optimal taste, consistency and quality of both the coating and the (meat) snack is guaranteed.

The invention seeks to provide a solution to some of the above problems.

### SUMMARY OF THE INVENTION

In a first aspect, the invention concerns a method for making a deep-fried snack provided with a batter coating according to claim 1, wherein the batter preferably has an optimal viscosity.

More specifically, the method comprises the following steps:
a) mixing batter ingredients into a homogeneous batter using a mixer in a mixing vessel, wherein the batter ingredients comprise a mixture comprising wheat flour and corn flour, wheat starch, a fat concentrate, raising agent and whey powder, and furthermore wheat flour, herbs and spices, and water; b) pumping the homogeneous batter or part of the batter from the mixing vessel to at a batter applicator by means of a pump system, c) pumping the batter from at the batter applicator to inside the batter applicator, wherein the batter applicator is set to provide a constant batter flow through a distribution mouth; and d) pumping the batter through the distribution mouth over a deep-fried snack, with the deep-fried snack being guided over a roller conveyor through the batter, wherein the homogeneous batter after mixing has a temperature between 22°C and 28°C, and a Bostwick viscosity value between 7.5 and 9.5 cm/30 s.

In a second aspect, the invention concerns a deep-fried snack provided with a batter coating according to claim 14. This deep-fried snack has been obtained using a method of the present invention.

An advantage of the method is that a batter is obtained with characteristics that are optimal for providing the batter as a coating on a deep-fried snack: thick enough to adhere or stick to the snack, and liquid enough to spread nicely around the snack. In addition, the temperature is ideal to guarantee the quality of the snack and not to negatively affect the taste and/or consistency of the snack. The resulting snack therefore has optimal quality, taste and consistency.

### DETAILED DESCRIPTION

The invention concerns both a method for making a deep-fried snack provided with a batter coating and such a deep-fried snack provided with a batter coating. The method ensures that an optimal batter is produced that spreads nicely over the surface of the snack when applied to the snack, while still sufficiently clinging to the snack and forming a coating. In addition, the temperature is ideal to guarantee the quality of the snack and not to negatively affect the taste and/or consistency of the snack.

Unless otherwise defined, all terms used in the description of the invention, including technical and scientific terms, have the meaning as commonly understood by a person skilled in the art to which the invention pertains. For a better understanding of the description of the invention, the following terms are explained explicitly.

In this document, "a" and "the" refer to both the singular and the plural, unless the context presupposes otherwise. For example, "a segment" means one or more segments.

When the term "around" or "about" is used in this document with a measurable quantity, a parameter, a duration or moment, and the like, then variations are meant of approx. 20% or less, preferably approx. 10% or less, more preferably approx. 5% or less, even more preferably approx. 1% or less, and even more preferably approx. 0.1% or less than and of the quoted value, insofar as such variations are applicable in the described invention. However, it must be understood that the value of a quantity used where the term "about" or "around" is used, is itself specifically disclosed.

The terms "comprise," "comprising," "consist of," "consisting of," "provided with," "have," "having," "include," "including," "contain," "containing" are synonyms and are inclusive or open terms that indicate the presence of what follows, and which do not exclude or prevent the presence of other components, characteristics, elements, members, steps, as known from or disclosed in the prior art.

Quoting numeric intervals by the endpoints includes all integers, fractions, and/or real numbers between the endpoints, including those endpoints.

In a first aspect, the invention concerns a method for making a deep-fried snack provided with a batter coating. The method comprises at least the following steps:
a) mixing batter ingredients into a homogeneous batter using a mixer in a mixing vessel, wherein the batter ingredients comprise a mixture comprising wheat flour and corn flour, wheat starch, a fat concentrate, raising agent and whey powder, and furthermore wheat flour, herbs and spices, and water;
b) pumping the homogeneous batter or part of the batter from the mixing vessel to at a batter applicator by means of a pump system,
c) pumping the batter from at the batter applicator to inside the batter applicator, wherein the batter applicator is set to provide a constant batter flow through a distribution mouth; and
d) pumping the batter through the distribution mouth over a deep-fried snack, with the deep-fried snack being guided over a roller conveyor through the batter,
wherein the homogeneous batter after mixing has a temperature between 22°C and 28°C, and a Bostwick viscosity between 7.5 and 9.5 cm/30 s.

According to an embodiment, during the filling of the mixing vessel with the batter ingredients and thus already before mixing step a), a scraper rotates in the mixing vessel, preferably at a low speed. This prevents the ingredients from sticking to the walls of the mixing vessel and/or an initial rough mixing of the ingredients is achieved. This low speed can, for example, be a speed of 15-50 rpm, preferably between 20 and 30 rpm, more preferably a speed of approximately 25 rpm. According to a further embodiment, this scraper continues to rotate during mixing step a).

According to an embodiment, a Ferrari mixer is used to mix the batter ingredients in step a). According to another or further embodiment, the mixer mixes at a speed between 1250 and 1750 rpm, preferably between 1400 and 1600 rpm, more preferably at a speed of approximately 1500 rpm. According to another or further embodiment, the mixer mixes in step a) for 8 to 12 minutes, preferably about 10 minutes, most preferably until the batter ingredients are mixed into a homogeneous batter.

The batter ingredients mixed in step a) comprise a mixture comprising wheat flour and corn flour, wheat starch, a fat concentrate, raising agent and whey powder, and further comprise wheat flour, herbs and spices, and water.

For clarity, the wheat flour of the mixture should be interpreted as a first fraction of wheat flour, while the "further wheat flour" should be interpreted as a second fraction of wheat flour.

According to an embodiment, the mixture comprises between 30 and 50 wt% wheat flour, between 20 and 40 wt% corn flour, between 10 and 30 wt% wheat starch, up to 20 wt% salt, up to 20 wt% fat concentrate, up to 20 wt% raising agent and up to 20 wt% whey powder, together not exceeding 100 wt%. The fat concentrate can, for example, comprise non-hydrogenated palm oil, milk sugar and/or caseinate. For example, the raising agent may comprise E450 and/or E500.

According to another or further embodiment, the batter ingredients comprise 10 to 18 wt% of the mixture as described in any of the embodiments, preferably 12 to 16 wt% of the mixture, most preferably 14 wt% of the mixture. The batter ingredients comprise 32 to 40 wt%, preferably 34 to 38 wt%, most preferably about 36 wt% wheat flour, excluding the wheat flour included in the mixture, 2.5 to 7.5 wt%, preferably 4 to 6 wt%, most preferably about 5 wt% herbs and spices, and further water added to 100 wt% of the ingredients.

Non-limiting examples of herbs and spices include salt, pepper, paprika, garlic powder, galangal, cumin and turmeric.

According to another or further embodiment, wind-sifted or cold viscosity wheat flour (excluding the wheat flour from the mixture) is used as wheat flour. Wind-sifted wheat flour has a very low protein and ash content due to the treatment, leading to a pleasant texture of the batter.

After mixing, the homogeneous batter has a temperature between 22°C and 28°C, preferably between 24°C and 26°C, most preferably about 25°C, and/or a Bostwick viscosity value between 7.5 and 9.5 cm/30 s, preferably between 8 and 9 cm/30 s, most preferably between 8.2 and 8.8 cm/30 s. A batter with these characteristics is optimal for coating a deep-fried snack: thick enough to adhere or stick to the snack, and liquid enough to spread nicely around the snack. In addition, the temperature is ideal to guarantee the quality of the snack and not to negatively affect the taste and/or consistency of the snack.

Optionally, the homogeneous batter is mixed again after step a) and before step b), so that the batter remains homogeneous before pumping in step b).

According to step b), the homogeneous batter or a portion of the batter is pumped from the mixing vessel to at a batter applicator using a pump system. Preferably, this pump system is a pump system suitable for pumping viscous products, such as the current batter, and this system is suitable for use in the food industry. Preferably, this pump system is or includes a flexible impeller pump. Such pumps guarantee a very constant flow and very constant flow rate of the product. A non-limiting example of this is a FIP 50S Johnson Pump.

According to an embodiment, the pump or pump system from step b) is mounted under the mixer from step a), and the homogeneous batter is pumped from the bottom of the mixing vessel via the pump to the batter applicator.

According to step c), the batter is pumped from at the batter applicator to inside the batter applicator. This can be done using the same pump/pump system as in step b). Preferably, this batter applicator is adapted to provide a constant batter flow through a distribution mouth on the applicator.

For clarity, it is further emphasized that pumping the batter from "at" the batter applicator to "inside" the batter applicator can be seen as pumping the batter from just "before" it is in the batter applicator to the situation where the batter is "inside" the batter applicator.

According to an embodiment, the amount of batter in the batter applicator is monitored, with the pumping of the batter to or into the batter applicator from the mixing vessel starting when the amount of batter in the applicator falls below a predefined working amount. As a result, filling the batter applicator is automated, and the level and flow of/in the applicator can be easily maintained constant.

According to step d) of the method of the invention, the batter is pumped through the distribution mouth of the batter applicator over a deep-fried snack, with the deep-fried snack being guided through the batter on a roller conveyor, also known as a conveyor belt or ladder belt.

According to an embodiment, the batter applicator comprises one or more, for example two, three or four, progressive cavity pumps for circulating the batter in the applicator and for pumping it through the distribution mouth. Such pumps are preferably suitable for pumping viscous products, such as the batter in the current context. In addition, such pumps are preferably suitable for use in the food industry. An advantage of such cavity pumps is that they can guarantee a very constant flow and a very constant flow rate of the product, in this case the batter. A non-limiting example of such a pump is a Johstadt T type FJ 30 1 S.

According to an embodiment, the one or more progressive cavity pumps are equipped with one or more variable-frequency drives, suitable for controlling the drive of these pumps. These are more accurate than the commonly used mechanical adjustable-speed drives.

According to an embodiment, by pumping the batter through the distribution mouth, a batter curtain is formed, through which the deep-fried snack is guided.

Preferably, the amount of batter that is pushed through the distribution mouth can be adjusted at the distribution mouth. This is preferably set in such a way that the batter runs or is pushed evenly over the entire width of the distribution mouth. This makes a "curtain" of batter appear to run over the deep-fried snack as the snack is guided through the batter via the roller conveyor. Preferably, the width of the distribution mouth is at least as wide and more preferably wider than the length of the deep-fried snack, so that the snack is completely coated with batter.

Regulating or adjusting the amount of batter pumped through the distribution mouth can be done by means of a sliding system at the mouth, or by any other means known to one skilled in the art to regulate the amount of batter.

According to another or further embodiment, the roller conveyor, also called conveyor belt or ladder belt, is provided with one or more variable-frequency drives, suitable for controlling the drive of these pumps. These are more accurate than the commonly used mechanical adjustable-speed drives.

The deep-fried snack which is provided with a batter coating by the current method is, according to an embodiment, a krokidel, primadel, crizly, or a turkey stick.

According to another or further embodiment, the deep-fried snack is provided with irregularities such as ridges on the surface before the snack is guided through the batter. This improves the adhesion of the batter to the snack. The deep-fried snack is preferably provided with ridges, for example a krokidel or primadel.

In a second aspect, the invention relates to a deep-fried snack provided with a batter coating.

According to an embodiment, the deep-fried snack is obtained by means of a method as discussed above in any of the previous embodiments.

According to another or further embodiment, the batter coating comprises wheat flour, corn flour, wheat starch, a fat concentrate, raising agent, whey powder, herbs and spices, and water.

When applying the batter to the deep-fried snack, it preferably has a temperature between 22°C and 28°C, preferably at a temperature of 25°C and a Bostwick viscosity between 7.5 and 9.5 cm/30 s, preferably between 8.2 and 8.8 cm/30 s.

According to another or further embodiment, the batter comprises 32 to 40 wt%, preferably 34 to 38 wt%, most preferably about 36 wt% wheat flour excluding the wheat flour included in the mixture (see below), 2.5 to 7.5 wt%, preferably 4 to 6 wt%, most preferably about 5 wt% herbs and spices, and 10 to 18 wt% of a mixture (see below), preferably 12 to 16 wt% mixture, most preferably 14 wt% mixture. The batter is further supplemented with water to 100% wt% of the ingredients.

The mixture as discussed above comprises between 30 and 50 wt% wheat flour, between 20 and 40 wt% corn flour, between 10 and 30 wt% wheat starch, up to 20 % salt, up to 20 wt% fat concentrate, up to 20 wt% raising agent and up to 20 wt% whey powder, together not exceeding 100 wt%. The fat concentrate can, for example, comprise non-hydrogenated palm oil, milk sugar and/or caseinate. For example, the raising agent may comprise E450 and/or E500.

According to another or further embodiment, wind-sifted or cold viscosity wheat flour (excluding the wheat flour from the mixture) is used as wheat flour. Wind-sieved wheat flour has a very low protein and ash content due to the treatment. This improves the texture of the batter.

In what follows, the invention is described by way of non-limiting examples illustrating the invention, and which are not intended to and should not be interpreted as limiting the scope of the invention.

### EXAMPLES

EXAMPLE 1: producing a krokidel, primadel, crizly or turkey stick by coating a deep-fried snack with a batter.

Both a krokidel and primadel are produced by coating a deep-fried snack, obtained by forming a chicken-based meat dough in an elongated form, with a batter. A crizly and turkey stick are also produced by coating a deep-fried snack with a batter. However, these are obtained by providing emulsified chicken and/or turkey, shaped via a molding machine, cooked and frozen, and then skewered on a skewer, which is then coated with the batter. This skewer also provides an elongated shape.

A deep-fried snack in an elongated shape, which has a rather smooth surface like the krokidel and primadel, is then provided with irregularities on the surface, creating ridges in the surface. This improves the adhesion of the batter to the meat. This is less necessary for the crizly and turkey stick, as the formed chicken slices and turkey cubes on the skewer already form a more uneven surface.

The ingredients of the batter are shown below. The percentages of ingredients in the batter may change as long as they fall within the limits below, and as long as the Bostwick viscosity value of the batter after mixing the ingredients as described below at a temperature of 22 to 28°C is between 7.5 and 9.5 cm/30 s.

| **Ingredient** | | **Amount (wt%)** | |
|---|---|---|---|
| Mixture | | 10-18 | |
| | • Wheat flour | | • 30-50 |
| | • Corn flour | | • 30-42 |
| | • Wheat starch | | • 10-30 |
| | • Salt | | • At most 20 |
| | • Fat concentrate based on non-hydrogenated palm oil, milk sugar, caseinate | | • At most 20 |
| | • Raising agent E450 and E500 | | • At most 20 |
| | • Whey powder | | • At most 20 |
| Wind-sifted or cold viscosity wheat flour | | 32-40 | |
| Herbs and spices | | 2.5-7.5 | |
| Water | | Supplement to 100% | |

For example, the batter contains the following ingredients:

| **Ingredient** | | **Amount (wt%)** | |
|---|---|---|---|
| Mixture | | 14 | |
| | • Wheat flour | | • 35 |
| | • Corn flour | | • 20 |
| | • Wheat starch | | • 10 |
| | • Salt | | • 10 |
| | • Fat concentrate based on non-hydrogenated palm oil, milk sugar, caseinate | | • 10 |
| | • Raising agent E450 and E500 | | • 5 |
| | • Whey powder | | • 10 |
| Wind-sifted or cold viscosity wheat flour | | 36 | |
| Herbs and spices | | 5 | |
| Water | | 45 | |

These ingredients are placed in a mixing vessel in which the ingredients can be mixed.

A scraper is placed in the mixing vessel which can rotate in the mixing vessel at a low speed. For example, the speed is set to 27 rpm and ensures that the ingredients do not stick while adding these ingredients to the vessel for mixing.

When all ingredients have been placed in the mixing vessel, a mixer is started in the mixing vessel to mix the ingredients into a homogeneous batter. The mixer is set at a speed between 1250 and 1750 rpm, preferably about 1500 rpm. After mixing for about 10 minutes, a homogeneous batter is obtained. Mixing preferably continues until a homogeneous batter is obtained with a Bostwick viscosity value between 7.5 and 9.5 cm/30 s at a temperature of 22 to 28°C. Preferably the viscosity value is about 8.5 cm/30 s and the temperature is about 25°C.

In a next step, the batter is pumped from the mixing vessel to a batter applicator. If the batter has stood still for a while before being pumped to the batter applicator, the batter will be mixed again before pumping to obtain a nice, homogeneous batter again.

Pumping to the batter applicator is done using a flexible impeller pump (FIP 50S Johnson Pump). The batter is then pumped into the batter applicator using the same pump. This pump guarantees a very constant flow of the batter to the batter applicator and is extremely suitable for pumping viscous nutrients.

The amount of batter in the batter applicator is monitored, with the pumping of the batter to or into the applicator from the mixing vessel starting when the amount of batter in the applicator falls below a predefined working amount. As a result, filling the batter applicator is automated, and the level and flow of/in the applicator can be easily maintained constant.

The batter applicator is adjusted so that a constant batter flow can be provided through a distribution mouth on this batter applicator. This batter applicator and distribution mouth are positioned in such a way with respect to a roller conveyor that the batter that is pumped through the distribution mouth forms a curtain that runs over the deep-fried snacks when the deep-fried snacks are guided over the roller conveyor / conveyor belt / ladder belt under the distribution mouth and through the batter.

Circulating the batter in the batter applicator and pumping the batter through the distribution mouth is done using one or two progressive cavity pumps, in this case Johstadt T type FJ 30 1 S. Like the flexible impeller pump, this pump is also ideal for pumping viscous nutrients and guarantees a constant flow over the deep-fried snacks.

Both these progressive cavity pumps and the roller conveyor / conveyor belt / ladder belt are equipped with one or more variable-frequency drives, suitable for controlling the drive of these pumps. These are more accurate than the commonly used mechanical adjustable-speed drives.

The distribution mouth can be adjusted to regulate the amount of batter, thus guaranteeing that a nice, homogeneous "curtain" of batter runs over the deep-fried snack. This prevents the snack from not being completely coated with the batter.

In this way, a deep-fried snack is obtained that is completely coated with a homogeneous layer of batter, whereby the batter adheres nicely to the surface of the snack and, by choosing the ideal viscosity, remains so.

The present invention should not be construed as being limited to the embodiments described above and certain modifications or changes may be added to the examples described without having to re-evaluate the appended claims.

## Claims

1. Method for making a deep-fried snack provided with a batter coating, comprising the steps:
a) mixing batter ingredients into a homogeneous batter using a mixer in a mixing vessel, wherein the batter ingredients comprise a mixture comprising wheat flour and corn flour, wheat starch, a fat concentrate, raising agent and whey powder, and furthermore wheat flour, herbs and spices, and water;
b) pumping the homogeneous batter or part of the batter from the mixing vessel to at a batter applicator by means of a pump system;
c) pumping the batter from at the batter applicator to inside the batter applicator, the batter applicator being set to provide a constant batter flow through a distribution mouth; and
d) pumping the batter through the distribution mouth over a deep-fried snack, with the deep-fried snack being guided over a roller conveyor through the batter;
wherein the homogeneous batter after mixing has a temperature between 22°C and 28°C, and a Bostwick viscosity value between 7.5 and 9.5 cm/30 s.

2. The method according to claim 1, wherein the mixer for mixing the batter ingredients is a Ferrari mixer.

3. The method according to claim 1 or 2, wherein the mixer for mixing the batter ingredients mixes at a speed between 1250 and 1750 rpm, preferably between 1400 and 1600 rpm, for 8 to 12 minutes.

4. The method according to any of the preceding claims, wherein the pump system used for pumping the batter to or into the batter applicator is a flexible impeller pump.

5. The method according to any of the preceding claims, wherein the amount of batter in the batter applicator is monitored, and with the pumping of the batter to or into the batter applicator from the mixing vessel starting when the amount of batter in the applicator falls below a predefined working amount.

6. The method according to any of the preceding claims, wherein the batter applicator comprises one or more progressive cavity pumps for circulating the batter in the applicator and for pumping it through the distribution mouth, optionally where the one or more progressive cavity pumps are provided with variable-frequency drives.

7. The method according to any of the preceding claims, wherein a batter curtain is formed by pumping the batter through the distribution mouth, through which the deep-fried snack is guided.

8. The method according to any of the preceding claims, wherein the roller conveyor is provided with a variable-frequency drive.

9. The method according to any of the preceding claims, wherein the mixture comprises between 30 and 50 wt% wheat flour, between 20 and 40 wt% corn flour, between 10 and 30 wt% wheat starch, up to 20 wt% salt, up to 20 wt% fat concentrate, up to 20 wt% raising agent and up to 20 wt% whey powder, together not exceeding 100 wt%.

10. The method according to any of the preceding claims, wherein the batter ingredients comprise 10 to 18 wt% mixture, 32 to 40 wt% wheat flour excluding the wheat flour included in the mixture, 2.5 to 7.5 wt% herbs and spices, and water supplemented to 100 wt%.

11. The method according to any of the preceding claims, wherein the wheat flour of the batter ingredients, excluding the wheat flour from the mixture, is wind-sieved or cold viscosity wheat flour.

12. The method according to any of the preceding claims, wherein the deep-fried snack is a krokidel, a primadel, a crizly or a turkey stick.

13. The method according to any of the preceding claims, wherein the deep-fried snack produced is provided with ridges on the surface before the snack is guided through the batter.

14. Deep-fried snack provided with a batter coating, wherein the batter coating comprises at least wheat flour, corn flour, wheat starch, a fat concentrate, raising agent, whey powder, herbs and spices, and water, obtained according to a method according to any of the preceding claims 1-13.
